(19) **Europäisches Patentamt**
**European Patent Office**
**Office européen des brevets**

(11) **EP 3 171 594 B1**

# (12) FASCICULE DE BREVET EUROPEEN

(45) Date de publication et mention
de la délivrance du brevet:
**17.02.2021  Bulletin 2021/07**

(51) Int Cl.:
**H04N 19/126** (2014.01)

(21) Numéro de dépôt: **16198079.2**

(22) Date de dépôt: **10.11.2016**

(54) **MÉTHODE DE COMPRESSION D'IMAGES PERMETTANT D'OBTENIR UNE QUALITÉ DE COMPRESSION FIXE**

BILDKOMPRIMIERUNGSVERFAHREN ZUR ERREICHUNG EINER BESTIMMTEN KOMPRIMIERUNGSQUALITÄT

METHOD OF IMAGES COMPRESSION ENABLING TO OBTAIN A FIXED COMPRESSION QUALITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.11.2015  FR 1502430**

(43) Date de publication de la demande:
**24.05.2017  Bulletin 2017/21**

(73) Titulaire: **Thales**
**92400 Courbevoie (FR)**

(72) Inventeurs:
- **CARLAVAN, Mikael**
  **06156 Cannes La Bocca Cedex (FR)**
- **FALZON, Frédéric**
  **06156 Cannes La Bocca Cedex (FR)**

(74) Mandataire: **Marks & Clerk France**
**Immeuble "Visium"**
**22, avenue Aristide Briand**
**94117 Arcueil Cedex (FR)**

(56) Documents cités:
- **JUN SUN ET AL: "Rate-Distortion Analysis of Dead-Zone Plus Uniform Threshold Scalar Quantization and Its Application Part II: Two-Pass VBR Coding for H.264/AVC", IEEE TRANSACTIONS ON IMAGE PROCESSING, IEEE SERVICE CENTER, PISCATAWAY, NJ, US, vol. 22, no. 1, 1 janvier 2013 (2013-01-01), pages 215-228, XP011492251, ISSN: 1057-7149, DOI: 10.1109/TIP.2012.2216275**

- **JINHUA YU: "Advantages of uniform scalar dead-zone quantization in image coding system", COMMUNICATIONS, CIRCUITS AND SYSTEMS, 2004. ICCCAS 2004. 2004 INTERNAT IONAL CONFERENCE ON CHENGDU, CHINA 27-29 JUNE 2004, PISCATAWAY, NJ, USA,IEEE, US, 27 juin 2004 (2004-06-27), pages 805-808Vol.2, XP010731902, DOI: 10.1109/ICCCAS.2004.1346303 ISBN: 978-0-7803-8647-1**

- **SULLIVAN MICROSOFT CORP (USA) G J ET AL: "On dead-zone plus uniform threshold scalar quantization", VISUAL COMMUNICATIONS AND IMAGE PROCESSING; 12-7-2005 - 15-7-2005; BEIJING,, 12 juillet 2005 (2005-07-12), XP030080946,**

- **YIZHOU DUAN ET AL: "Efficient dead-zone plus uniform threshold scalar quantization of generalized Gaussian random variables", VISUAL COMMUNICATIONS AND IMAGE PROCESSING (VCIP), 2011 IEEE, IEEE, 6 novembre 2011 (2011-11-06), pages 1-4, XP032081340, DOI: 10.1109/VCIP.2011.6115946 ISBN: 978-1-4577-1321-7**

- **PICA A ET AL: "Digital Video Image Quality and Perceptual Coding, Chapter 12 (HSV Based Perceptual Video Encoders)", 21 November 2005 (2005-11-21), DIGITAL VIDEO IMAGE QUALITY AND PERCEPTUAL CODING, CRC, TAYLOR & FRANCIS, BOCA RATON, FLA. [U.A.], PAGE(S) 337 - 360, XP002591833, ISBN: 978-0-8247-2777-2**

EP 3 171 594 B1

**Description**

L'invention concerne le domaine de la compression d'images et porte sur une méthode de compression d'images permettant d'obtenir une qualité de compression fixe, sans contrainte particulière sur le débit.

L'invention s'applique avantageusement à la compression d'images de grande taille, en particulier des images prises par un satellite d'observation.

Les méthodes connues de compression d'images sont le plus souvent basées sur des modèles faisant intervenir à la fois la qualité de compression (ou la distorsion engendrée par l'opération de compression) et le débit obtenu après compression. Le défaut de ces solutions est qu'elles contrôlent la qualité de compression via une quantité annexe qui est le débit et permettent le plus souvent un contrôle global (sur toute l'image) de la qualité sans permettre une régulation locale.

Pour des applications qui n'imposent pas de débit contraint, il existe un besoin d'une méthode de compression d'images qui permet d'obtenir une qualité cible sur chaque zone ou bloc de l'image sans contrôle du débit. De telles applications incluent notamment la transmission d'images depuis un satellite d'observation vers une station au sol. Les prises de vues effectuées par un satellite d'observation correspondent à des images de grande taille pour lesquelles la qualité de compression est un paramètre prépondérant alors que le canal de transmission de la liaison descendante entre le satellite et le sol présente le plus souvent une compatibilité avec des débits de transmission plus importants que pour d'autres applications de transmission sans fils.

On connait par ailleurs les méthodes de compression d'images décrites dans les documents FR3013490 et EP1037470.

La méthode décrite dans le document FR3013490 présente l'inconvénient de fonctionner selon un processus itératif complexe qui est difficilement compatible d'une implémentation sur un dispositif à ressources limitées. La méthode décrite dans le document EP1037470 est basée sur une modélisation de la distorsion qui dépend du débit. Le document Pica A et al: "Digital Video Image Quality and Perceptual Coding, Chapter 12 (HSV Based Perceptual Video Encoders)", 21 novembre 2005 (2005-11-21), Digital Video Image Quality and Perceptual Coding, CRC, Taylor & Francis, Boca Raton, FLA. [U.A.], pages 337 - 360, XP002591833, ISBN: 978-0-8247-2777-2 divulgue une méthode de codage d'images en utilisant un quantificateur qui comprend une zone morte.

L'invention propose une méthode de compression d'image basée sur un modèle de distorsion qui ne fait pas intervenir le débit.

Un avantage de cette méthode est qu'elle permet de réguler aussi bien localement que globalement la qualité de l'image compressée, et ne nécessite aucun a priori sur l'image à comprimer.

L'invention a pour objet une méthode de compression d'images selon la revendication 1, comprenant les étapes suivantes appliquées à au moins une image :

- Décorréler l'image en lui appliquant une transformée mathématique de sorte à obtenir un ensemble de coefficients,
- Décomposer l'image en blocs et, pour chaque bloc de l'image,
- Quantifier lesdits coefficients à l'aide d'un quantificateur scalaire uniforme à zone morte ayant une demi-zone morte de taille T et un pas de quantification $\Delta$,
- Coder les coefficients quantifiés,
- La taille T de la demi-zone morte du quantificateur scalaire étant déterminée par minimisation de l'écart entre une distorsion de quantification estimée D(T), dépendant au moins de la dite taille T, et une distorsion de quantification cible $D_c$.

La distorsion de quantification estimée correspond à une erreur moyenne commise en quantifiant lesdits coefficients à l'aide du quantificateur scalaire uniforme à zone morte.

La distorsion de quantification estimée est déterminée comme la somme d'un premier terme représentatif de la distorsion de quantification engendrée par la mise à zéro des coefficients dont le module est inférieur à la taille T de la demi-zone morte et d'un second terme représentatif de la distorsion de quantification engendrée par la quantification, avec le pas de quantification $\Delta$, des coefficients ayant un module supérieur ou égal à la taille T de la demi-zone morte.

Ledit second terme est déterminé par le calcul suivant: $\alpha^2 M(T)\dfrac{T^2}{12}$, où $\alpha$ est un paramètre prédéterminé du quantificateur et M(T) est le nombre de coefficients dont le module est supérieur ou égal à la taille T de la demi-zone morte du quantificateur scalaire.

Selon une variante particulière, la méthode de compression d'images selon l'invention comprend en outre, pour chaque bloc, la détermination du pas de quantification $\Delta$ comme étant égal à la taille T de la demi-zone morte déterminée et pondérée par un paramètre $\alpha$ prédéterminé.

Le paramètre $\alpha$ peut être choisi dans l'intervalle [0,2 ; 3] et peut être déterminé indépendamment pour chaque bloc.

Le paramètre $\alpha$ peut être fixé à une valeur identique pour tous les blocs de l'image.

Selon un aspect particulier de l'invention, la méthode peut comprendre en outre une étape de codage sans perte du paramètre $\alpha$.

Selon un aspect particulier de l'invention, ladite transformée mathématique est une transformée en ondelettes ou une transformée en cosinus discrète.

Selon un aspect particulier de l'invention, les coefficients quantifiés sont codés à l'aide d'un codeur source, par exemple un codeur entropique.

Selon une variante particulière, la méthode selon l'invention comprend en outre, pour chaque bloc, une étape de codage sans perte de la taille T de la demi-zone morte.

L'invention a également pour objet un codeur image correspondant selon la revendication 10.

L'invention a aussi pour objet un satellite comprenant un codeur image selon la revendication 11.

Le satellite selon l'invention peut comprendre en outre des moyens de transmission au sol des coefficients quantifiés codés et/ou de la taille T de la demi-zone morte codée et/ou du paramètre $\alpha$ codé.

L'invention a encore pour objet un programme d'ordinateur selon la revendication 13, comportant des instructions pour l'exécution de la méthode de compression d'image selon l'invention, lorsque le programme est exécuté par un processeur.

L'invention a encore pour objet un support d'enregistrement lisible par un processeur selon la revendication 14, sur lequel est enregistré un programme comportant des instructions pour l'exécution de la méthode de compression d'image selon l'invention, lorsque le programme est exécuté par un processeur.

D'autres caractéristiques et avantages de la présente invention apparaîtront mieux à la lecture de la description qui suit en relation aux dessins annexés qui représentent :

- La figure 1, un organigramme détaillant les étapes de la méthode de compression d'images selon l'invention,
- Les figures 2a et 2b, deux exemples de trames binaires utilisées pour la transmission des résultats de compression d'une image,
- La figure 3, un schéma illustrant un codeur d'images selon l'invention.

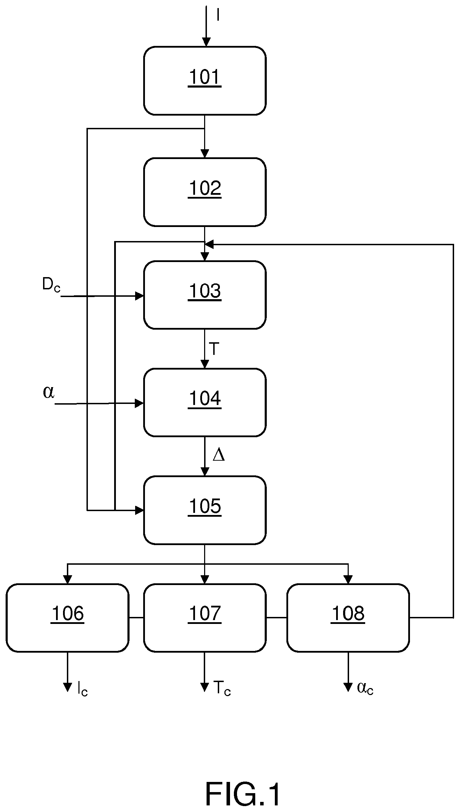

La figure 1 illustre, sur un organigramme, les étapes de la méthode de compression d'images selon l'invention. La méthode est décrite pour la compression d'une image I vers une image codée $I_c$. Pour un flux d'images comprenant une succession de prises de vues, la méthode s'applique de façon séquentielle et identique pour chaque image du flux.

Cette méthode comprend une première étape 101 de décorrélation de l'image I par l'application d'une transformée mathématique du type transformée orthogonale ou bi-orthogonale permettant de décorréler l'information contenue dans l'image, par exemple en agissant sur son contenu fréquentiel. La transformée mathématique utilisée peut typiquement être une transformée en cosinus discrète (DCT en anglais) ou une transformée en ondelettes ou toute autre transformée mathématique équivalente. La transformée mathématique utilisée peut, par exemple, permettre d'obtenir un ensemble de coefficients représentatifs du contenu fréquentiel de l'image I. La transformée mathématique utilisée peut, par ailleurs, permettre d'obtenir une représentation parcimonieuse de l'image, c'est-à-dire dont le module des coefficients transformés ordonnés décroît rapidement.

L'image I est ensuite décomposée 102 en blocs de pixels correspondant à des zones de l'image. Ces blocs sont, par exemple, de dimension égale à 8 pixels par 8 pixels mais peuvent être de tailles différentes du moment qu'ils permettent un pavage complet de l'image I. Un bloc peut également être confondu avec l'image dans son intégralité.

Les étapes suivantes de la méthode de compression sont appliquées successivement à chaque bloc de l'image I obtenue par la décomposition 102.

Au préalable, on effectue un réarrangement des coefficients de la transformée appliquée à l'étape 101 pour les réordonner afin que chaque bloc de coefficients de l'image transformée corresponde à un bloc de la décomposition 102 de l'image.

Les blocs de coefficients sont par la suite quantifiés 104 par un quantificateur scalaire uniforme à zone morte de paramètres T correspondant à la taille de la demi-zone morte et $\Delta$ correspondant au pas de quantification.

Pour rappel, un quantificateur scalaire uniforme à zone morte a pour fonction de quantifier un nombre réel de la façon suivante :

- Les nombres dont la valeur absolue est inférieure à T sont mis à zéro,
- Les nombres dont la valeur absolue est supérieure ou égale à T sont quantifiés à l'aide du pas de quantification $\Delta$.

Le document « an overview of quantization in JPEG 2000, Michael Marcellin et al.,Signal Processing : Image Communication, 2002 » décrit l'utilisation d'un tel quantificateur scalaire uniforme à zone morte dans le contexte de la norme de compression d'image JPEG 2000.

Dans une étape 103 préalable à l'opération 105 de quantification scalaire, on détermine la valeur optimale du paramètre T qui permet d'obtenir une distorsion de quantification la plus proche possible d'une distorsion cible $D_c$.

La distorsion de quantification correspond à l'erreur quadratique moyenne commise en quantifiant les coefficients à l'aide du quantificateur scalaire uniforme à zone morte.

Cette distorsion de quantification est estimée comme la somme de deux termes. Le premier terme correspond à la distorsion engendrée par la mise à zéro des coefficients dont le module est inférieur à T. Le second terme correspond à la distorsion engendrée par la quantification, avec le pas de quantification $\Delta$, des coefficients dont le module est supérieur ou égal à T.

La relation (1) donne un exemple d'estimation de la distorsion de quantification sur la base de ce mo-

dèle.

$$D(T) = \frac{1}{N}\left( D_0(T) + \alpha^2 M(T) \frac{T^2}{12} \right) \quad (1)$$

Le premier terme $D_0(T)$ correspond à la distorsion engendrée par la mise à zéro des coefficients $C_i$ dont le module est inférieur à T et peut être calculée à l'aide de la relation (2).

$$D_0(T) = \sum_{|C_i|<T} |C_i|^2 \quad (2)$$

Le second terme $\alpha^2 M(T) \dfrac{T^2}{12}$ est une estimée de la distorsion engendrée par la quantification, avec le pas de quantification $\Delta$, des coefficients dont le module est supérieur ou égal à T.

$\alpha$ est un paramètre du quantificateur scalaire, pris préférentiellement dans l'intervalle [0,2 ;3].

M(T) est le nombre de coefficients dont le module est supérieur ou égal à T, obtenus à l'issue de l'étape 101 pour un bloc donné comprenant N coefficients.

L'étape 103 consiste alors à rechercher la valeur du paramètre T qui permet de minimiser l'erreur entre D(T) et $D_c$, sur l'horizon d'un bloc comprenant N coefficients. L'erreur entre D(T) et $D_c$ peut être une erreur quadratique.

Dans une étape 104, le pas de quantification $\Delta$ = $\alpha$.T est ensuite déterminé à partir du paramètre $\alpha$.

Le paramètre $\alpha$ a une influence sur le débit final obtenu pour l'image compressée $I_c$. Une valeur de ce paramètre proche de 1 engendre un débit faible alors qu'une valeur éloignée de 1 engendre un débit plus élevé.

Le choix de ce paramètre réside dans un compromis entre la diversité de contenu de l'image et entre le débit final obtenu. Un paramètre $\alpha$ choisi dans l'intervalle [0,2 ;3] permet d'obtenir un débit faible pour une grande variété d'images .

Le paramètre $\alpha$ peut être fixé pour l'ensemble d'une image ou pour plusieurs images mais il peut également varier d'un bloc de coefficients à un autre. Un avantage d'utiliser un paramètre $\alpha$ différent pour chaque bloc de coefficients est que cela permet une optimisation locale du débit.

Les coefficients quantifiés à l'aide du quantificateur scalaire de paramètres T (déterminé à l'étape 104) et $\Delta$ (déterminé à l'étape 105) sont ensuite codés 106, par un codeur source, par exemple un codeur entropique.

Les paramètres T et $\alpha$ du quantificateur scalaire peuvent également être codés, par un codeur source sans pertes, par exemple un codeur entropique.

Les coefficients codés et les paramètres codés du quantificateur scalaire peuvent ensuite être transmis sous la forme de trames binaires vers un dispositif de décompression distant.

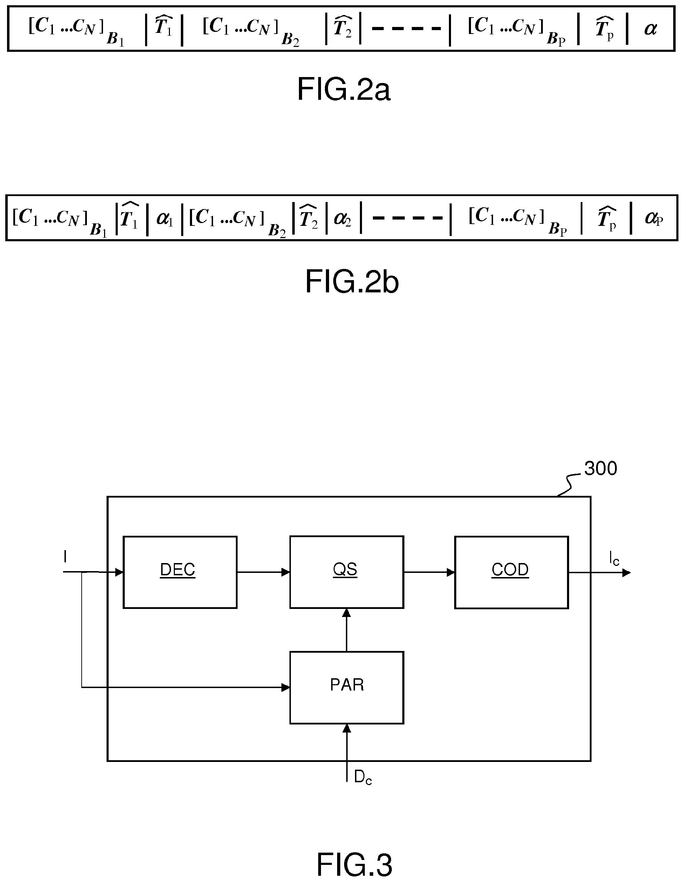

Les figures 2a et 2b illustrent deux exemples de trames binaires pour la mise en forme, en vue de leur transmission, des coefficients codés.

Dans le premier exemple de la figure 2a, les coefficients $C_j$ codés, avec j variant de 1 au nombre N de coefficients par blocs, sont rangés par blocs $B_i$ et associés, pour chaque bloc, au paramètre de quantification $T_i$. L'indice i varie de 1 au nombre de blocs P dans une image. Le paramètre codé $\alpha$ est transmis par exemple à la fin d'une trame correspondant à une image. Il peut également être transmis à un autre endroit prédéfini de la trame, par exemple en tête de trame.

Dans le second exemple de la figure 2b, un paramètre codé $\alpha_i$ est transmis, par exemple, à la fin de chaque série de coefficients correspondants à un bloc $B_i$. Alternativement, ce paramètre peut aussi être transmis avant la série de coefficients ou à un endroit quelconque prédéfini de la sous-trame contenant la série de coefficients correspondants à un bloc.

La figure 3 schématise un exemple de codeur images 300 selon l'invention adapté à mettre en œuvre la méthode de compression d'images selon l'invention.

Un tel codeur 300 reçoit en entrée une ou plusieurs images I. Les images I peuvent être des prises de vues capturées par un satellite d'observation. Dans ce scénario, le codeur 300 peut être embarqué dans la charge utile d'un satellite d'observation et interfacé avec les instruments de prise de vue (non représentés sur la figure 3). Mais le codeur 300 peut également recevoir des images I capturées par tout autre dispositif de capture d'image, tel qu'une caméra. Les images I peuvent être stockées ou préenregistrées en vue d'être fournies en entrée du codeur 300.

Le codeur 300 comporte un premier module DEC de décorrélation de l'image par application d'une transformée mathématique conformément à l'étape 101 de la méthode selon l'invention. Les coefficients obtenus en sortie du module DEC sont réarrangés par blocs conformément à l'étape 102 de l'invention. Ce réarrangement peut être réalisé par le module DEC ou par un module supplémentaire d'interface entre le module DEC et les autres modules du codeur 300. Un quantificateur scalaire uniforme à zone morte QS reçoit les coefficients produits en sortie du module DEC et opère une étape de quantification scalaire, conforme à l'étape 105 de la méthode selon l'invention. Le quantificateur scalaire QS reçoit des paramètres fournis par un calculateur PAR des paramètres de quantification qui exécute les étapes 103 et 104 de la méthode selon l'invention à partir d'une consigne $D_C$ de qualité fournie pour chaque blocs de coefficients à quantifier. Un codeur source COD, par exemple un codeur entropique, code ensuite les coefficients quantifiés en sortie du quantificateur scalaire QS et peut coder également, selon les modes de réalisation de l'invention, les paramètres du quantificateur. Le flux binaire $I_c$ obtenu en sortie du codeur entropique COD est ensuite transmis vers un support de stockage ou vers un module de transmission par voie satellite, ou par voie radio, ou par tout autre moyen de transmission sans fil ou filaire, ou encore par fibre optique etc.

L'exemple d'architecture du codeur 300 donné à la figure 3 est présenté à titre illustratif et non limitatif. Sans sortir du cadre de l'invention, l'Homme du métier saura envisager des implémentations différentes de la méthode de compression selon l'invention dans un codeur logiciel ou matériel ou intégrant des éléments à la fois logiciel et matériel. En particulier les différents modules DEC,QS,COD,PAR peuvent être arrangés de façon différentes, ils peuvent être décomposés en sous-modules ou au contraire regroupés en un module unique.

Les modules du codeur 300 selon l'invention peuvent être implémentés à partir d'éléments matériel et/ou logiciel. A ce titre, l'invention peut notamment être mise en œuvre en tant que programme d'ordinateur comportant des instructions pour son exécution. Le programme d'ordinateur peut être enregistré sur un support d'enregistrement lisible par un processeur. Le support peut être électronique, magnétique, optique ou électromagnétique.

En particulier, l'invention dans son ensemble ou chaque module du codeur selon l'invention peut être implémenté par un dispositif comprenant un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le dispositif peut utiliser un ou plusieurs circuits électroniques dédiés ou un circuit à usage général. La technique de l'invention peut se réaliser sur une machine de calcul reprogrammable (un processeur ou un micro contrôleur par exemple) exécutant un programme comprenant une séquence d'instructions, ou sur une machine de calcul dédiée.

Selon un mode de réalisation, le dispositif comprend au moins un support de stockage lisible par ordinateur (RAM, ROM, EEPROM, mémoire flash ou une autre technologie de mémoire, CD-ROM, DVD ou un autre support à disque optique, cassette magnétique, bande magnétique, disque de stockage magnétique ou un autre dispositif de stockage, ou un autre support de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les fonctions des modes de réalisation de l'invention décrits précédemment.

A titre d'exemple d'architecture matérielle adaptée à mettre en œuvre l'invention, un dispositif selon l'invention peut comporter un bus de communication auquel sont reliés une unité centrale de traitement ou microprocesseur (CPU, acronyme de « *Central Processing Unit* » en anglais), une mémoire morte (ROM, acronyme de « *Read Only Memory* » en anglais) pouvant comporter les programmes nécessaires à la mise en œuvre de l'invention; une mémoire vive ou mémoire cache (RAM, acronyme de « *Random Access Memory* » en anglais) comportant des registres adaptés à enregistrer des variables et paramètres créés et modifiés au cours de l'exécution des programmes précités ; et une interface de communication ou E/S (I/O acronyme de « *Input/ouput* » en anglais) adaptée à transmettre et à recevoir des données.

La référence à un programme d'ordinateur qui, lorsqu'il est exécuté, effectue l'une quelconque des fonctions décrites précédemment, ne se limite pas à un programme d'application s'exécutant sur un ordinateur hôte unique ou sur un processeur unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. Il peut également être téléchargeable à partir d'un serveur distant. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

## Revendications

1. Méthode de compression d'images comprenant les étapes suivantes appliquées à au moins une image (I) :

   • Décorréler (101) l'image (I) en lui appliquant une transformée mathématique de sorte à obtenir un ensemble de coefficients,
   • Décomposer (102) l'image (I) en blocs et, pour chaque bloc de l'image (I),
   • Quantifier (105) lesdits coefficients à l'aide d'un quantificateur scalaire uniforme à zone morte ayant une demi-zone morte de taille T et un pas de quantification Δ,
• Coder (106) les coefficients quantifiés,
• Déterminer (103) la taille T de la demi-zone morte du quantificateur scalaire par minimisation de l'écart entre une distorsion de quantification estimée D(T), dépendant au moins de la dite taille T, et une distorsion de quantification cible D$_c$, sans contrainte sur le débit obtenu après compression,

la méthode étant **caractérisée en ce que** la distorsion de quantification estimée D(T) correspond à une erreur moyenne commise en quantifiant lesdits coefficients à l'aide du quantificateur scalaire uniforme à zone morte, la distorsion de quantification estimée étant déterminée comme la somme d'un premier terme représentatif de la distorsion de quantification engendrée par la mise à zéro des coefficients dont le module est inférieur à la taille T de la demi-zone morte et d'un second terme représentatif de la distorsion de quantification engendrée par la quantification, avec le pas de quantification Δ, des coefficients ayant un module supérieur ou égal à la taille T de la demi-zone morte, ledit second terme étant déterminé par le calcul suivant : $\alpha^2 M(T) \dfrac{T^2}{12}$ ,

où α est un paramètre prédéterminé du quantificateur et M(T) est le nombre de coefficients dont le module est supérieur ou égal à la taille T de la demi-zone morte du quantificateur scalaire.

2. Méthode de compression d'images selon la revendication 1 comprenant en outre, pour chaque bloc, la détermination (104) du pas de quantification Δ comme étant égal à la taille T de la demi-zone morte déterminée et pondérée par un paramètre α prédéterminé.

3. Méthode de compression d'images selon la revendication 2 dans laquelle le paramètre α est choisi dans l'intervalle [0,2 ; 3].

4. Méthode de compression d'images selon l'une des revendications 2 ou 3 dans laquelle le paramètre α est déterminé indépendamment pour chaque bloc.

5. Méthode de compression d'images selon l'une des revendications 2 ou 3 dans laquelle le paramètre α est fixé à une valeur identique pour tous les blocs de l'image.

6. Méthode de compression d'images selon l'une des revendications 2 à 5 comprenant en outre une étape (108) de codage sans perte du paramètre α.

7. Méthode de compression d'images selon l'une des revendications précédentes dans laquelle ladite transformée mathématique est une transformée en ondelettes ou une transformée en cosinus discrète.

8. Méthode de compression d'images selon l'une des revendications précédentes dans laquelle les coefficients quantifiés sont codés (106) à l'aide d'un codeur source, par exemple un codeur entropique.

9. Méthode de compression d'images selon l'une des revendications précédentes comprenant en outre, pour chaque bloc, une étape (107) de codage sans perte de la taille T de la demi-zone morte.

10. Codeur image (300) pour coder au moins une image (I) comprenant :

• Un premier module (DEC) configuré pour

- Décorréler (101) l'image (I) en lui appliquant une transformée mathématique de sorte à obtenir un ensemble de coefficients,
- Décomposer (102) l'image (I) en blocs et, pour chaque bloc de l'image (I),

• Un quantificateur scalaire uniforme à zone morte (QS) de demi-zone morte de taille T et de pas de quantification Δ pour quantifier lesdits coefficients,
• Un codeur source (COD) pour coder les coefficients quantifiés,

le codeur image étant en outre configuré pour déterminer (103) la taille T de la demi-zone morte du quantificateur scalaire par minimisation de l'écart entre une distorsion de quantification estimée D(T), dépendant au moins de la dite taille T, et une distorsion de quantification cible D$_c$, la distorsion de quantification estimée D(T) correspondant à une erreur moyenne commise en quantifiant lesdits coefficients à l'aide du quantificateur scalaire uniforme à zone morte, la distorsion de quantification estimée étant déterminée comme la somme d'un premier terme représentatif de la distorsion de quantification engendrée par la mise à zéro des coefficients dont le module est inférieur à la taille T de la demi-zone morte et d'un second terme représentatif de la distorsion de quantification engendrée par la quantification, avec le pas de quantification Δ, des coefficients ayant un module supérieur ou égal à la taille T de la demi-zone morte, ledit second terme étant déterminé par le calcul suivant : $\alpha^2 M(T) \dfrac{T^2}{12}$ , où α est un paramètre prédéterminé du quantificateur et M(T) est le nombre de coefficients dont le module est supérieur ou égal à la taille T de la demi-zone morte du quantificateur scalaire.

11. Satellite comprenant un codeur image (300) selon la revendication 10.

12. Satellite selon la revendication 11 comprenant en outre des moyens de transmission au sol des coefficients quantifiés codés et/ou de la taille T de la demi-zone morte codée et/ou du paramètre α codé.

13. Programme d'ordinateur comportant des instructions pour l'exécution de la méthode de compression d'image selon l'une quelconque des revendications 1 à 9, lorsque le programme est exécuté par un processeur.

14. Support d'enregistrement lisible par un processeur sur lequel est enregistré un programme comportant des instructions pour l'exécution de la méthode de compression d'image selon l'une quelconque des revendications 1 à 9, lorsque le programme est exécuté par un processeur.

**Patentansprüche**

1. Bildkompressionsverfahren, umfassend folgende Schritte, welche an mindestens einem Bild (I) angewandt werden:

   • Dekorrelieren (101) des Bildes (I) durch Anwendung einer mathematischen Transformierten darauf, um eine Gruppe von Koeffizienten zu erzielen,
   • Zerlegen (102) des Bildes (I) in Blöcke, und für jeden Block des Bildes (I),
   • Quantisieren (105) der Koeffizienten mithilfe eines einheitlichen skalaren Quantisierers mit einer Totzone, welche eine halbe Totzone der Größe T und einen Quantisierungsschritt Δ aufweist,
   • Codieren (106) der quantisierten Koeffizienten,
   • Bestimmen (103) der Größe T der halben Totzone des skalaren Quantisierers durch Minimieren des Abstandes zwischen einer geschätzten Quantisierungs-Verzerrung D(T), welche mindestens von der Größe T abhängig ist, und einer Ziel-Quantisierungs-Verzerrung $D_C$, ohne Vorgabe in Bezug auf die nach der Kompression erzielte Rate,

   wobei das Verfahren **dadurch gekennzeichnet ist, dass** die geschätzte Quantisierungs-Verzerrung D(T) einem mittleren Fehler entspricht, welcher begangen wird, indem die Koeffizienten mithilfe des einheitlichen skalaren Quantisierers mit Totzone quantisiert werden, wobei die geschätzte Quantisierungs-Verzerrung als die Summe eines ersten Terms bestimmt wird, welcher repräsentativ für die Quantisierungs-Verzerrung ist, welche durch das Einnullen derjenigen Koeffizienten bewirkt wird, deren Modul kleiner als die Größe T der halben Totzone ist und eines zweiten Terms, welcher repräsentativ für die Quantisierungs-Verzerrung ist, welche durch die Quantisierung mit dem Quantisierungsschritt Δ derjenigen Koeffizienten bewirkt wird, welche einen Modul aufweisen, welcher größer als die oder gleich der Größe T der halben Totzone ist, wobei der zweite Term durch folgende Berechnung bestimmt wird:

$$\alpha^2 M(T) \frac{T^2}{12},$$ wobei α ein vorbestimmter Parameter des Quantisierers ist und M(T) die Anzahl der Koeffizienten ist, deren Modul größer als die oder gleich der Größe T der halben Totzone des skalaren Quantisierers ist.

2. Bildkompressionsverfahren nach Anspruch 1, ferner umfassend, für jeden Block, die Bestimmung (104) des Quantisierungsschrittes Δ als gleich der Größe T der halben Totzone, welche durch einen vorbestimmten Parameter α bestimmt und gewichtet wird.

3. Bildkompressionsverfahren nach Anspruch 2, wobei der Parameter α in dem Intervall [0,2 ; 3] gewählt ist.

4. Bildkompressionsverfahren nach einem der Ansprüche 2 oder 3, wobei der Parameter α unabhängig für jeden Block bestimmt wird.

5. Bildkompressionsverfahren nach einem der Ansprüche 2 oder 3, wobei der Parameter α auf einen identischen Wert für alle Bildblöcke festgelegt wird.

6. Bildkompressionsverfahren nach einem der Ansprüche 2 bis 5, ferner umfassend einen Schritt (108) des Codierens ohne Verlust des Parameters α.

7. Bildkompressionsverfahren nach einem der vorhergehenden Ansprüche, wobei die mathematische Transformierte eine Wavelet-Transformierte oder eine diskrete Cosinustransformierte ist.

8. Bildkompressionsverfahren nach einem der vorhergehenden Ansprüche, wobei die quantisierten Koeffizienten mithilfe eines Quellcodierers codiert (106) werden, beispielsweise eines Entropiecodierers.

9. Bildkompressionsverfahren nach einem der vorhergehenden Ansprüche, ferner umfassend, für jeden Block, einen Schritt (107) des Codierens ohne Verlust der Größe T der halben Totzone.

10. Bildcodierer (300) zum Codieren mindestens eines Bildes (I), umfassend:

- ein erstes Modul (DEC), konfiguriert zum:

  - Dekorrelieren (101) des Bildes (I) durch Anwendung einer mathematischen Transformierten darauf, um eine Gruppe von Koeffizienten zu erzielen,
  - Zerlegen (102) des Bildes (I) in Blöcke, und für jeden Block des Bildes (I),

- einen einheitlichen skalaren Quantisierer mit einer Totzone (QS) mit einer halben Totzone der Größe T und einem Quantisierungsschritt ∆ zum Quantisieren der Koeffizienten,
- einen Quellcodierer (COD) zum Codieren der quantisierten Koeffizienten,

wobei der Bildcodierer ferner konfiguriert ist zum Bestimmen (103) der Größe T der halben Totzone des skalaren Quantisierers durch Minimieren des Abstandes zwischen einer geschätzten Quantisierungs-Verzerrung D(T), welche mindestens von der Größe T abhängig ist, und einer Ziel-Quantisierungs-Verzerrung $D_C$, wobei die geschätzte Quantisierungs-Verzerrung D(T) einem mittleren Fehler entspricht, welcher begangen wird, indem die Koeffizienten mithilfe des einheitlichen skalaren Quantisierers mit Totzone quantisiert werden, wobei die geschätzte Quantisierungs-Verzerrung als die Summe eines ersten Terms bestimmt wird, welcher repräsentativ für die Quantisierungs-Verzerrung ist, welche durch das Einnullen derjenigen Koeffizienten bewirkt wird, deren Modul kleiner als die Größe T der halben Totzone ist und eines zweiten Terms, welcher repräsentativ für die Quantisierungs-Verzerrung ist, welche durch die Quantisierung mit dem Quantisierungsschritt ∆ derjenigen Koeffizienten bewirkt wird, welche einen Modul aufweisen, welcher größer als die oder gleich der Größe T der halben Totzone ist, wobei der zweite Term durch folgende Berechnung bestimmt wird: $\alpha^2 M(T) \dfrac{T^2}{12}$, wobei α ein vorbestimmter Parameter des Quantisierers ist und M(T) die Anzahl der Koeffizienten ist, deren Modul größer als die oder gleich der Größe T der halben Totzone des skalaren Quantisierers ist.

11. Satellit, umfassend einen Bildcodierer (300) nach Anspruch 10.

12. Satellit nach Anspruch 11, ferner umfassend Übertragungsmittel am Boden der codierten quantisierten Koeffizienten und/oder der Größe T der codierten halben Totzone und/oder des codierten Parameters α.

13. Computerprogramm, umfassend Anweisungen zur Ausführung des Bildkompressionsverfahrens nach einem der Ansprüche 1 bis 9, wenn das Programm von einem Prozessor ausgeführt wird.

14. Aufzeichnungsträger, welcher durch einen Prozessor lesbar ist, auf welchem ein Programm aufgezeichnet ist, welches Anweisungen zur Ausführung des Bildkompressionsverfahrens nach einem der Ansprüche 1 bis 9 umfasst, wenn das Programm von einem Prozessor ausgeführt wird.

**Claims**

1. Image compression method comprising the following steps applied to at least one image (I):

   - Decorrelating (101) the image (I) by applying thereto a mathematical transform so as to obtain a set of coefficients,
   - Decomposing (102) the image (I) into blocks and, for each block of the image (I),
   - Quantizing (105) said coefficients using a dead-zone uniform scalar quantizer having a semi-dead zone of size T and a quantization step ∆,
   - Coding (106) the quantized coefficients,
   - Determine (103) the size T of the semi-dead zone of the scalar quantizer by minimizing the difference between an estimated quantization distortion D(T), dependent at least on said size T, and a target quantization distortion $D_c$ without constraint on the flow obtained after compression,

   the method being **characterized in that** the estimated quantization distortion D(T) corresponds to a mean error made while quantizing said coefficients using the dead-zone uniform scalar quantizer, the estimated quantization distortion being determined as the sum of a first term representative of the quantization distortion engendered by the zeroing of the coefficients the modulus of which is less than the size T of the semi-dead zone and a second term representative of the quantization distortion engendered by the quantization, with the quantization step ∆, of the coefficients having a modulus greater than or equal to the size T of the semi-dead zone, said second term being determined by the following calculation: $\alpha^2 M(T) \dfrac{T^2}{12}$, where α is a preset parameter of the quantizer and M(T) is the number of coefficients the modulus of which is greater than or equal to the size T of the semi-dead zone of the scalar quantizer.

**2.** Image compression method according to claim 1, furthermore comprising, for each block, setting (104) the quantization step $\Delta$ equal to the determined size T of the semi-dead zone and weighted by a preset parameter $\alpha$.

**3.** Image compression method according to claim 2, wherein the parameter $\alpha$ is chosen in the interval [0.2; 3].

**4.** Image compression method according to any of claim 2 or 3, wherein the parameter $\alpha$ is set independently for each block.

**5.** Image compression method according to any of claim 2 or 3, wherein the parameter $\alpha$ is set to an identical value for all the blocks of the image.

**6.** Image compression method according to any of claims 2 to 5, furthermore comprising a step (108) of coding the parameter $\alpha$ losslessly.

**7.** Image compression method according to any of the preceding claims, wherein said mathematical transform is a wavelet transform or a discrete cosine transform.

**8.** Image compression method according to any of the preceding claims, wherein the quantized coefficients are coded (106) using a source coder, for example an entropy coder.

**9.** Image compression method according to any of the preceding claims furthermore comprising, for each block, a step (107) of coding the size T of the semi-dead zone losslessly.

**10.** Image coder (300) for coding at least one image (I) comprising:

  • A first module (DEC) configured to

    - Decorrelate (101) the image (I) by applying thereto a mathematical transform so as to obtain a set of coefficients,
    - Decompose (102) the image (I) into blocks and, for each block of the image (I),

  • A dead-zone uniform scalar quantizer (QS) of semi-dead zone of size T and of quantization step $\Delta$ for quantizing said coefficients,
  • A source coder (COD) for coding the quantized coefficients,

the image coder being furthermore configured to determine (103) the size T of the semi-dead zone of the scalar quantizer by minimizing the difference between an estimated quantization distortion D(T), dependent at least on said size T, and a target quantization distortion $D_c$, the estimated quantization distortion D(T) corresponding to a mean error made while quantizing said coefficients using the dead-zone uniform scalar quantizer, the estimated quantization distortion being determined as the sum of a first term representative of the quantization distortion engendered by the zeroing of the coefficients the modulus of which is less than the size T of the semi-dead zone and a second term representative of the quantization distortion engendered by the quantization, with the quantization step $\Delta$, of the coefficients having a modulus greater than or equal to the size T of the semi-dead zone, said second term being determined by the following calculation:

$$\alpha^2 M(T)\frac{T^2}{12},$$ where $\alpha$ is a preset parameter of the quantizer and M(T) is the number of coefficients the modulus of which is greater than or equal to the size T of the semi-dead zone of the scalar quantizer.

**11.** Satellite comprising an image coder (300) according to claim 10.

**12.** Satellite according to claim 11, furthermore comprising means for transmitting to the ground the coded quantized coefficients and/or the size T of the coded semi-dead zone and/or the coded parameter $\alpha$.

**13.** Computer program including instructions for executing the image compression method according to any of claims 1 to 9, when the program is executed by a processor.

**14.** A processor-readable storage medium on which is stored a program including instructions for executing the image compression method according to any of claims 1 to 9, when the program is executed by a processor.

FIG.1

$$[C_1 \ldots C_N]_{B_1} \quad \left|\widehat{T_1}\right| \quad [C_1 \ldots C_N]_{B_2} \quad \left|\widehat{T_2}\right| \quad - \ - \ - \ - \quad [C_1 \ldots C_N]_{B_P} \quad \left|\ \widehat{T_P}\ \right| \quad \alpha$$

## FIG.2a

$$[C_1 \ldots C_N]_{B_1} \left|\widehat{T_1}\right| \alpha_1 \left|[C_1 \ldots C_N]_{B_2}\right|\widehat{T_2}\left|\alpha_2\right| - \ - \ - \ - \left|\ [C_1 \ldots C_N]_{B_P}\ \right|\ \widehat{T_P}\ \left|\ \alpha_P\right.$$

## FIG.2b

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3013490

- EP 1037470 A

**Littérature non-brevet citée dans la description**

- Digital Video Image Quality and Perceptual Coding, Chapter 12 (HSV Based Perceptual Video Encoders). **PICA A et al.** Digital Video Image Quality and Perceptual Coding. CRC, Taylor & Francis, 21 Novembre 2005, 337-360

- **MICHAEL MARCELLIN et al.** *Signal Processing : Image Communication,* 2002